# EUROPEAN PATENT SPECIFICATION

(11) **EP 3 368 779 B1**
(45) Date of publication and mention of the grant of the patent: **15.07.2020**
(21) Application number: 16860379.3
(22) Date of filing: 22.09.2016
(51) Int. Cl.: F16B 25/00, F16B 25/04, F16B 25/10

(54) **EASY STARTING SCREW**
SCHRAUBE MIT EINFACHEM START
VIS À AMORÇAGE FACILE

(30) Priority: 28.10.2015 SE 1551392
(43) Date of publication of application: 05.09.2018
(73) Proprietor: ESSVE Produkter AB, 164 07 Kista (SE)
(72) Inventor: BERGFJORD, Mathias, 416 48 Göteborg (SE); LARSSON, Linus, 411 35 Göteborg (SE); LARSSON, Ove, 426 74 Västra Frölunda (SE); LINDBERG, Christofer, 187 52 Täby (SE); FALCK, Jörgen, 45592 Munkedal (SE)
(74) Representative: Zacco Sweden AB
(86) International application number: PCT/SE2016/050892
(87) International publication number: WO 2017/074239

(56) References cited:
- DE-A1- 4 227 274
- DE-A1-102007 000 154
- GB-A- 2 208 417
- JP-A- H0 658 313
- JP-A- 2006 194 329
- US-A- 4 194 430
- US-A- 5 304 024
- US-A1- 2002 114 682
- US-A1- 2004 253 076
- US-A1- 2010 278 614
- US-A1- 2010 278 614

## Description

### Field of the Invention

The present invention relates to a screw. The screw is particularly useful for wood material or composite material.

### Background of the Invention

Screws are used more and more in favor of nails for fastening of wooden and other building elements. Using a traditional self-tapping screw, a substantial axial force typically needs to be applied before the rotation of the screw starts to drive the screw into the building element. This may be uncomfortable for the user of the wood screws, in particular when installing the screws upwards or overhead in the forward direction. Furthermore, some time is spent pushing each screw into the building element, which may add up to a substantial amount of time considering the large number of screws that may need to be installed in connection with a building project or similar.

One approach for reducing the needed axial force is disclosed by AU 2014202698. AU 2014202698 discloses a wood screw having a first tip portion with a circular cross-section and a second tip portion with a polygonal cross-section. The second tip portion terminates in a vertex of the polygonal cross-section, and the screw thread is configured without interruption over the first and second tip portions. According to AU 2014202698, easy penetration of the screw is provided by a small cone angle and diameter of the first tip portion.

Although the small cone angle of the screw according to AU 2014202698 may be beneficial in reducing the axial force needed in connection with installation of a screw, there still appears to be room for improvement. In particular, there appears to be room for providing an easy starting screw requiring an even lower initial axial force.

US 5,304,024 discloses a screw with a thread, whose front and rear flanks have a different angle with respect to the screw's longitudinal axis.

### Summary

In view of the above-mentioned and other drawbacks of the prior art, it is an object of the present invention to provide an improved screw, and in particular to provide an easy starting screw requiring an even lower initial axial force.

According to a first aspect not of the present invention, it is therefore provided a screw comprising a tip; a head for accommodating a tool to rotate the screw around a rotational axis of the screw; and a thread extending from the tip towards the head, the thread having a thread depth that varies along a length of the screw between a minimum thread depth and a maximum thread depth, wherein the thread comprises a tip thread portion extending along one half turn or less around the rotational axis of the screw and exhibiting a thread depth increase within the tip thread portion corresponding to at least one half of the maximum thread depth.

By the term "thread depth" should be understood the extension of the thread in the radial direction, that is, in a direction perpendicular to the rotational axis of the screw.

It should be understood that the thread need not extend uninterrupted from the tip towards the head of the screw, but that the thread may be wholly or partly absent at one or several locations from a tread starting point at the tip to an end of the thread.

Moreover, the screw may comprise an unthreaded portion adjacent to the head of the screw.

The present invention is based upon the realization that the configuration of the thread in the close vicinity of the tip of the screw is crucial to the starting behavior of the screw. In particular, the present inventors have realized that a rapid increase at the tip of the axially directed (towards the head of the screw) surface of the thread will result in a very efficient initial conversion of torque to axial force driving the screw into the building element.

By configuring the thread to quickly approach its maximum thread depth, the axial driving force of the screw will increase rapidly from the start of rotation, resulting in a quick entry of the screw with reduced effort.

A screw, not according to the invention, having a thread portion at the tip (the tip thread portion) that extends along one half turn or less around the rotational axis of the screw and exhibits a thread depth increase within the tip thread portion corresponding to at least one half of the maximum thread depth, will require a substantially lower axial force for initiating penetration into a workpiece than a traditional wood screw with similar overall dimensions. As explained above, this in turn provides for improved ergonomics and increased productivity.

Even more advantageously, the thread depth increase within the tip thread portion may correspond to at least seventy percent of the maximum thread depth.

The thread depth increase within the tip thread portion may preferably be a monotonic increase to provide for the desired rapid increase of the axially directed surface of the thread.

To provide for the desired rapid starting action, the tip thread portion may advantageously be located at or very close to the tip of the screw. For instance, the tip thread portion may be located within three millimeters from the tip of the screw.

Not according the present invention, the thread may extend from a thread starting point at the tip of the screw, and the thread may further exhibit a first average rate of increase of the thread depth with respect to rotational angle around the rotational axis along a first half turn from the thread starting point; and a second average rate of increase of the thread depth with respect to rotational angle around the rotational axis along a second half turn from the thread starting point, directly following the first half turn, wherein the first average rate of increase is at least three times the second average rate of increase.

The factor of three between the first average rate and the second average rate has proven to represent a beneficial trade-off between the desired easy starting behavior and manufacturability of the screw.

According to various embodiments of the present invention, the screw may advantageously be a self-tapping screw suitable for wood and composite materials etc.

Thus, in some example embodiments, the screw is a wood screw. By way of example, the head of the wood screw comprises a frusto-conical cross section.

In the following, the screw according to embodiments of the present invention is sometimes referred to as a wood screw. This should not be construed as limiting the scope defined by the appended claims.

The screw according to embodiments of the present invention may further comprise a screw body extending from said head to a screw body tip. The thread may extend along the screw body.

To provide for a further reduction in the axial force needed for starting the screw, the above-mentioned first average rate of increase may be at least five times the second average rate of increase.

According to embodiments, the thread starting point may substantially coincide with the tip of the screw, so that the thread start is the first portion of the screw that comes into contact with the work piece.

It should be noted that, in these embodiments, the thread start may substantially coincide with the end of the screw body (the screw body tip), or extend beyond the end of the screw body. In the latter case, the tip of the screw may be formed by a coiling free thread, similar to a corkscrew.

Furthermore, a portion of the screw including the tip may have a conical envelope to facilitate penetration into the work piece.

Moreover, in embodiments, the tip of the screw may form a gimlet point to facilitate accurate and distinct placement of the screw and guiding the thread to enter the work piece when rotation of the screw is started.

According to the present invention, it is provided a screw comprising: a tip; a head for accommodating a tool to rotate the screw around a rotational axis of the screw; and a thread extending from a thread starting point at the tip towards the head, the thread having a thread depth, wherein the thread exhibits: a first average rate of increase of the thread depth with respect to rotational angle around the rotational axis along a first half turn from the thread starting point; and a second average rate of increase of the thread depth with respect to rotational angle around the rotational axis along a second half turn from the thread starting point, directly following the first half turn, the first average rate of increase being at least three times the second average rate of increase.

Moreover, the screw may advantageously be configured in such a way that a thread depth after one full turn from the thread starting point is greater than one half of a maximum thread depth of the thread.

Even more advantageously, the thread depth after one full turn from the thread starting point may be greater than eighty percent of the maximum thread depth.

### Brief Description of the Drawings

These and other aspects of the present invention will now be described in more detail, with reference to the appended drawings showing an example embodiment of the invention, wherein:
Figs 1a-c illustrate a conventional screw;
Fig 2 is a diagram illustrating the thread depth of the screw in figs 1a-c as a function of the rotational angle from the thread starting point;
Figs 3a-c illustrate a screw according to an example embodiment of the present invention;
Fig 4 is a diagram illustrating the thread depth of the screw in figs 3a-c as a function of the rotational angle from the thread starting point;
Figs 5a-b schematically show a first alternative configuration of the tip of the screw according to embodiments of the present invention;
Figs 6a-b schematically show a second alternative configuration of the tip of the screw according to embodiments of the present invention; and
Figs 7a-b schematically show a third alternative configuration of the tip of the screw according to embodiments of the present invention.

### Detailed Description of Example Embodiments

In the present detailed description, various embodiments of the screw according to the present invention are mainly discussed with reference to a wood screw having an unthreaded shank portion directly adjacent to the screw head, and a screw head with a frusto-conical cross-section.

It should be noted that this by no means limits the scope of the present invention, which equally well includes, for example, screws with other thread configurations and head configurations. For instance, the thread may run all the way from the head to the tip of the screw. Furthermore, the head may have any other suitable configuration, such as having a flat or undercut bottom etc.

Moreover, the tip thread portion exhibiting a very rapid increase in thread depth has generally been illustrated as starting from the thread starting point. It should be noted that this need not necessarily be the case, but that the tip thread portion may start later along the thread than the thread starting point.

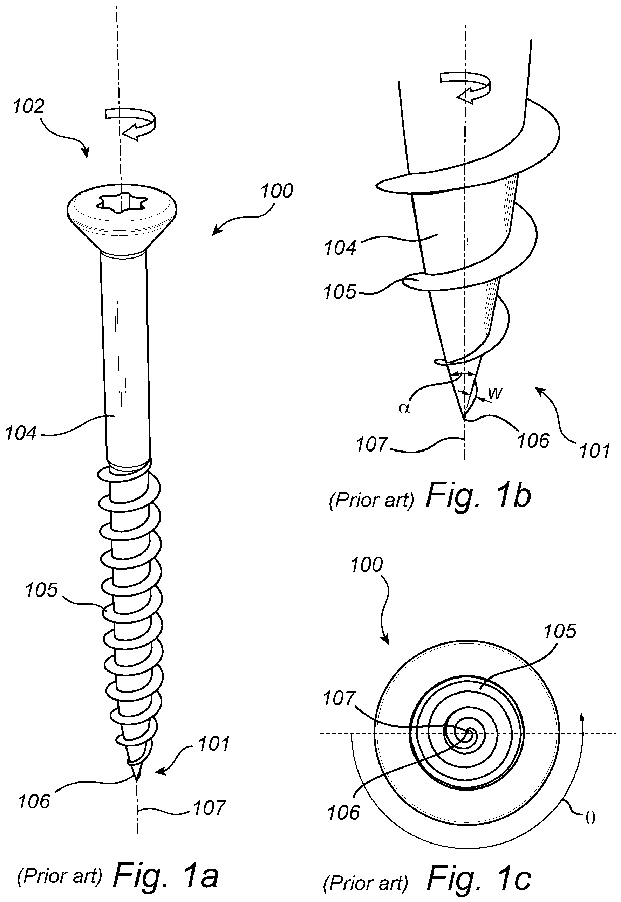

Figs 1a-c illustrate a conventional screw for illustrating the previously known way of achieving easy penetration into a workpiece by means of a sharp tip having a relatively small cone angle and small diameter.

Fig 1 a is a side view of a prior art screw 100 having a tip 101 and a head 102. As is indicated in fig 1a, the screw 100 has a body 104 and a thread 105 extending from a thread starting point 106 at the tip 101 towards the head 102 of the screw 100.

As is customary, the thread 105 spirals along the screw 100 to allow the screw 100 to be screwed into a workpiece through clockwise rotation, as seen from the head 102 towards the tip 101, around a rotational axis 107.

In fig 1b, which is an enlarged view of the tip 101 of the screw 100 in fig 1a, the "sharpness" of the tip 101 is manifested by the small cone angle α and the small thread depth w in the vicinity of the tip 101 of the screw 100.

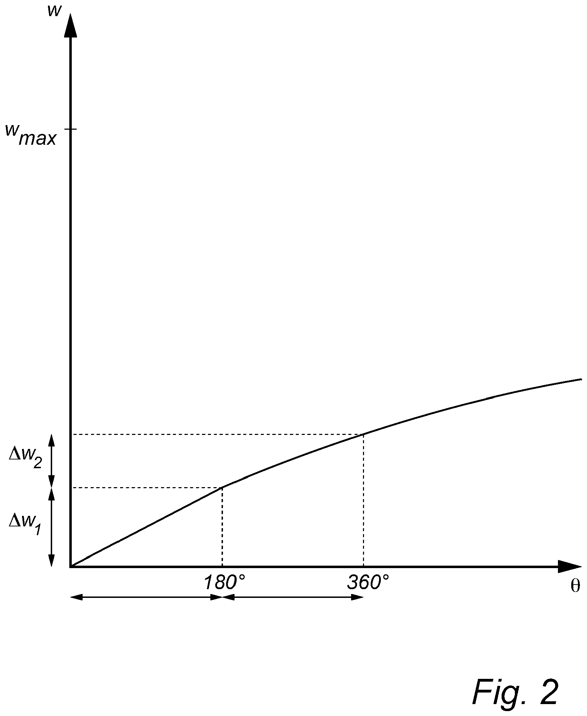

The configuration of the thread 105 of the prior art screw 100 in the vicinity of the tip 101 will now be described with reference to fig 1c, which is a plane view of the tip 101 as seen along the rotational axis 107, and fig 2, which is a diagram showing the thread depth w as a function of rotational angle θ.

As can be seen in the diagram in fig 2, the thread depth w(θ) of the prior art screw 100 grows with increasing rotational angle θ with a first average rate of increase K₁(θ) during a first half turn (from 0° to 180°) around the rotational axis 107 from the thread starting point 106, and with a second average rate of increase K₂(θ) during the second half turn (from 180° to 360°).

For a typical example of a prior art screw 100, the first average rate of increase K₁(θ)≈0.002 mm/°, and the second average rate of increase K₂(θ)≈0.001 mm/°.

Accordingly, the first average rate of increase is about twice the second average rate of increase.

Furthermore, the thread depth w for the prior art screw 100 increases gradually with a slowly decreasing rate of increase to the maximum thread depth (after several turns around the rotational axis 107). As is clear from a comparison in the diagram of fig 2 between the largest increase in thread depth Δw₁ during one half turn (the first half turn) and the maximum thread depth wₘₐₓ, the prior art screw 100 does not have a tip thread portion extending along one half turn or less around the rotational axis of the prior art screw 100 and exhibiting a thread depth increase within the tip thread portion corresponding to at least one half of the maximum thread depth wₘₐₓ.

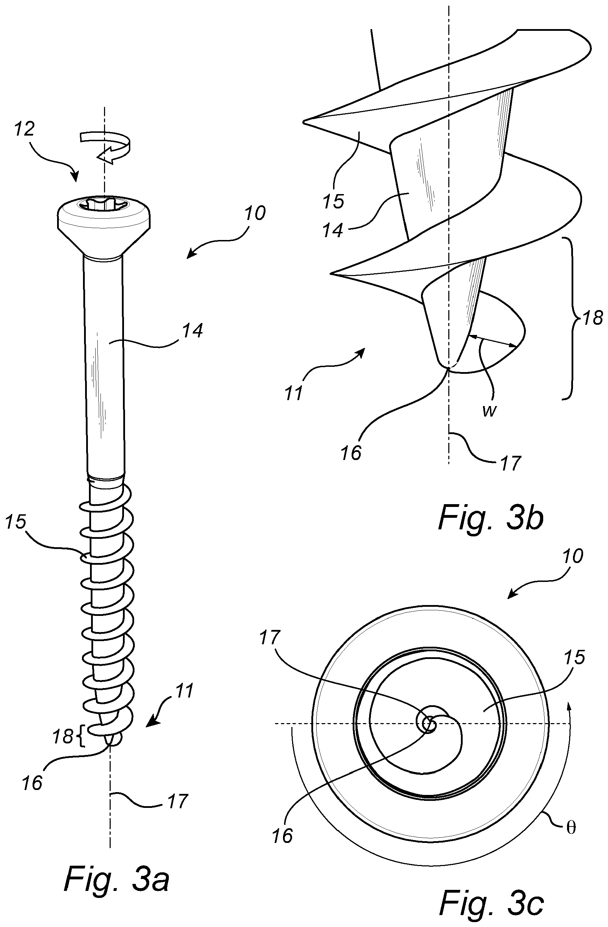

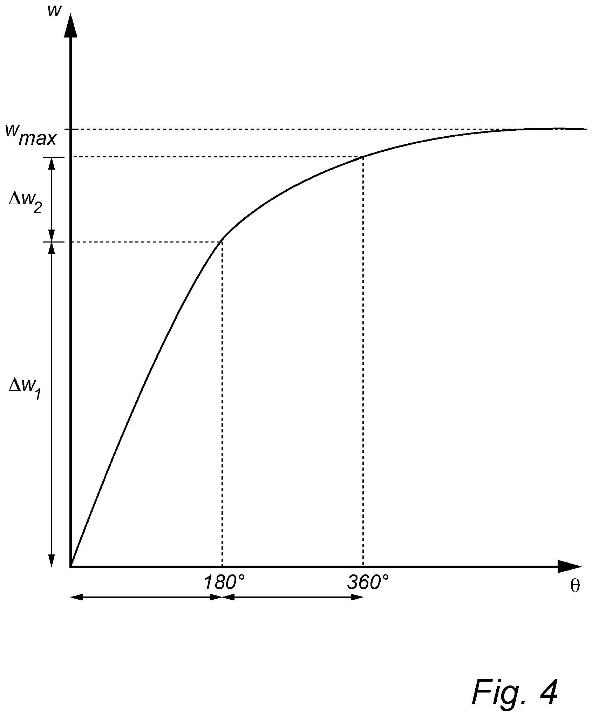

A screw according to an example embodiment of the present invention will now be described with reference to figs 3a-c and fig 4. In this example embodiment, the screw is a wood screw intended for wood material or similar composite material.

Turning first to fig 3a, which is a side view of the inventive screw 10, the screw 10 has a tip 11 and a head 12. In this example embodiment, the head has a frusto-conical cross section. A screw head with a frusto-conical cross section is particularly useful for screws intended for wood material or other similar composite material. As is indicated in fig 3a, the screw 10 has a body 14 and a thread 15 extending from a thread starting point 16 at the tip 11 towards the head 12 of the screw 10.

The thread 15 spirals along the screw 10 to allow the screw 10 to be screwed into a workpiece through clockwise rotation, as seen from the head 12 towards the tip 11, around a rotational axis 17.

In analogy with the prior art screw 100 described above with reference to figs 1a-c and fig 2, the inventive screw 10 in figs 3a-c may exhibit a screw body 14 having a rather small diameter and cone angle at the tip 11 of the screw 10 to reduce the amount of material that has to be displaced with the screw 10 enters a work piece.

The main difference between the inventive screw 10 in figs 3a-c and the prior art screw 100 in figs 1a-c instead lies in the configuration of the thread 15 at the tip 11 of the screw 10. To reduce the axial force needed to initiate the penetration of the screw 10 into the workpiece, the thread 15 is configured to practically immediately present a substantial axially oriented driving surface to the workpiece. To that end, the inventive screw 10 comprises a tip thread portion 18 exhibiting a very rapid increase in thread depth w. In the example embodiment of figs 3a-c, the tip thread portion extends from the thread starting point 16. The configuration of the thread 15 at the tip 11 of the screw 10 will be described in greater detail below with reference to fig 3c and fig 4.

The configuration of the thread 15 of the inventive screw 10 in the vicinity of the tip 11 will now be described further with reference to fig 3c, which is a plane view of the tip 11 as seen along the rotational axis 17, and fig 4, which is a diagram showing the thread depth w as a function of rotational angle θ.

As can be seen in the diagram in fig 4, the thread depth w(θ) of the screw 10 grows with increasing rotational angle θ with a first average rate of increase K₁(θ) during a first half turn (from 0° to 180°) around the rotational axis 17 from the thread starting point 16, and with a second average rate of increase K₂(θ) during the second half turn (from 180° to 360°).

For the screw 10 according to the example embodiment of the invention described with reference to figs 3a-c, the first average rate of increase K₁(0)≈0.007 mm/°, and the second average rate of increase K₂(θ)≈0.001 mm/°.

Accordingly, the first average rate of increase is about seven times the second average rate of increase. This is a measure of the very rapid initial increase in the thread depth w. Due to this rapid initial increase in the thread depth, the torque applied to the screw 10 is translated to an axial driving force already from the very start of the rotation of the screw 10.

Furthermore, the tip thread portion 18 of the inventive screw 10 exhibits a thread depth increase Δw₁ within the tip thread portion 18 corresponding to at least one half of the maximum thread depth wₘₐₓ. This is schematically indicated in fig 4.

Above, one example embodiment of the inventive easy starting screw 10 was described with reference to figs 3a-c and fig 4. It should be understood that the tip 11 of the screw 10 may be configured in other ways while still achieving the desired easy starting behavior.

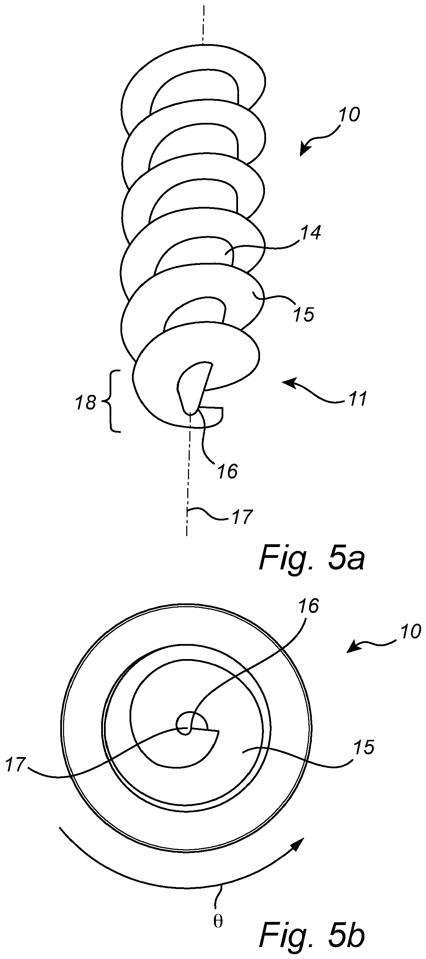

Referring first to figs 5a-b, the thread 15 may initially extend in a direction that is substantially perpendicular to the rotational axis 17 of the screw 10. The thread depth w will then increase in as a step function of the rotational angle θ from the thread starting point 16.

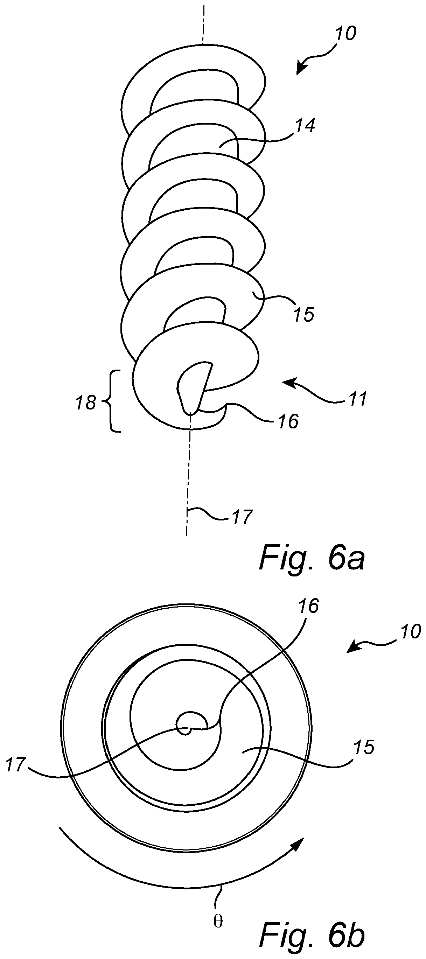

Turning to figs 6a-b, the thread 15 may instead start from a thread starting point 16 that is separated from the body 14 of the screw 10. In the exemplary configuration of figs 6a-b, the thread starting point 16 is also not on the rotational axis 17.

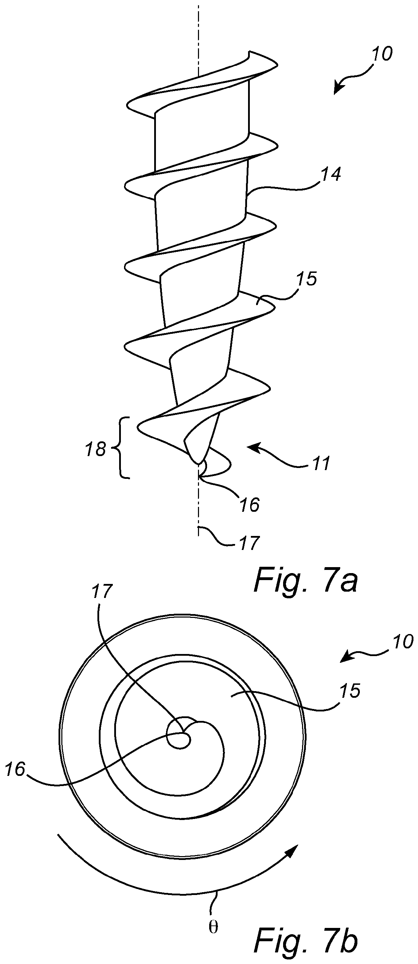

Finally referring to figs 7a-b, the thread 15 extends beyond the body 14 of the screw 10 so that the thread 15 is the first part of the screw 10 that is presented to the workpiece.

Each of the screws 10 briefly described above with reference to figs 5a-b, 6a-b, and 7a-b has a thread 15 comprising a tip thread portion extending one half turn or less around the rotational axis of the screw and exhibiting a thread depth increase within the tip thread portion corresponding to at least one half of the maximum thread depth.

Moreover, each of the screws 10 briefly described above with reference to figs 5a-b, 6a-b, and 7a-b has a thread 15 exhibiting a first average rate of increase of the thread depth with respect to rotational angle around the rotational axis along a first half turn from the thread starting point; and a second average rate of increase of the thread depth with respect to rotational angle around the rotational axis along a second half turn from the thread starting point, directly following the first half turn, wherein the first average rate of increase is at least three times the second average rate of increase.

The person skilled in the art realizes that the present invention by no means is limited to the preferred embodiments described above. On the contrary, many modifications and variations are possible within the scope of the appended claims. In the claims, the word "comprising" does not exclude other elements or steps, and the indefinite article "a" or "an" does not exclude a plurality. Any reference signs in the claims should not be construed as limiting the scope.

## Claims

1. A screw (10) comprising:
a tip (11);
a head (12) for accommodating a tool to rotate said screw (10) around a rotational axis (17) of said screw (10); and
a thread (15) extending from a thread starting point (16) at said tip (11) towards said head (12), said thread (15) having a thread depth (w),
whereby said thread (15) exhibits:
a first average rate of increase (K₁(θ)) of said thread depth with respect to rotational angle (θ) around said rotational axis (17) along a first half turn from said thread starting point (16); and
a second average rate of increase (K₂(θ)) of said thread depth (w) with respect to rotational angle (θ) around said rotational axis (17) along a second half turn from said thread starting point (16), directly following said first half turn,
said first average rate of increase (K₁(θ)) being at least three times said second average rate of increase (K₂(θ)).

2. The screw (10) according to claim 1, wherein a thread depth (w) after one full turn from said thread starting point (16) is greater than one half of a maximum thread depth (wₘₐₓ) of said thread (15).

3. The screw (10) according to claim 2, wherein said thread depth (w) after one full turn from said thread starting point (16) is greater than eighty percent of said maximum thread depth (wmax).

## Patentansprüche

1. Schraube (10) umfassend:
eine Spitze (11);
einen Kopf (12) zur Aufnahme eines Werkzeugs zum Drehen der Schraube (10) um eine Drehachse (17) der Schraube (10); und
ein Gewinde (15), das sich von einem Gewindeanfangspunkt (16) an der Spitze (11) zum Kopf (12) hin erstreckt, welches Gewinde (15) eine Gewindetiefe (w) besitzt,
wobei das Gewinde (15) aufweist:
eine erste durchschnittliche Anstiegsrate (K₁(θ)) der Gewindetiefe in Bezug auf den Drehwinkel (θ) um die Drehachse (17) entlang einer ersten halben Umdrehung vom Gewindeanfangspunkt (16); und
eine zweite durchschnittliche Anstiegsrate (K₂(θ)) der Gewindetiefe (w) in Bezug auf den Drehwinkel (θ) um die Drehachse (17) entlang einer zweiten halben Umdrehung vom Gewindeanfangspunkt (16), der ersten halben Umdrehung direkt folgend,
wobei die erste durchschnittliche Anstiegsrate (K₁(θ)) zumindest das Dreifache der zweiten durchschnittlichen Anstiegsrate (K₂(θ)) beträgt.

2. Schraube (10) nach Anspruch 1, wobei eine Gewindetiefe (w) nach einer vollen Umdrehung vom Gewindeanfangspunkt (16) größer als eine Hälfte einer maximalen Gewindetiefe (wₘₐₓ) des Gewindes (15) ist.

3. Schraube (10) nach Anspruch 2, wobei die Gewindetiefe (w) nach einer vollen Umdrehung vom Gewindeanfangspunkt (16) größer als achtzig Prozent der maximalen Gewindetiefe (wₘₐₓ) ist.

## Revendications

1. Vis (10) comprenant :
une pointe (11) ;
une tête (12) pour loger un outil destiné à faire tourner ladite vis (10) autour d'un axe de rotation (17) de ladite vis (10) ; et
un filetage (15) s'étendant depuis un point de départ de filetage (16) à ladite pointe (11) vers ladite tête (12), ledit filetage (15) ayant une profondeur de filetage (w),
ledit filetage (15) présentant :
un premier taux moyen d'augmentation (K1(θ)) de ladite profondeur de filetage par rapport à l'angle de rotation (θ) autour dudit axe de rotation (17) le long d'un premier demi-tour à partir dudit point de départ de filetage (16) ; et
un deuxième taux moyen d'augmentation (K2(θ)) de ladite profondeur de filetage (w) par rapport à l'angle de rotation (θ) autour dudit axe de rotation (17) le long d'un deuxième demi-tour à partir dudit point de départ de filetage (16), en suivant directement ledit premier demi-tour,
ledit premier taux moyen d'augmentation (K1(θ)) étant au moins trois fois ledit deuxième taux moyen d'augmentation (K2(θ)).

2. Vis (10) selon la revendication 1, dans laquelle une profondeur de filetage (w) après un tour complet à partir dudit point de départ de filetage (16) est supérieure à la moitié d'une profondeur de filetage maximale (wmax) dudit filetage (15).

3. Vis (10) selon la revendication 2, dans laquelle ladite profondeur de filetage (w) après un tour complet à partir dudit point de départ de filetage (16) est supérieure à quatre-vingt pour cent de ladite profondeur de filetage maximale (wmax).
